# EUROPÄISCHE PATENTSCHRIFT

(11) **EP 0 921 900 B1**
(45) Veröffentlichungstag und Bekanntmachung des Hinweises auf die Patenterteilung: **27.03.2002**
(21) Anmeldenummer: 97918999.0
(22) Anmeldetag: 25.08.1997
(51) Int. Cl.: B23Q 1/54, B23Q 1/62

(54) **BOHR- UND FRÄSWERK ZUM VERARBEITEN VON WERKSTOFFSTANGEN**
DRILLING AND MILLING MECHANISM FOR MACHINING MATERIAL RODS
ALESEUSE ET FRAISEUSE POUR USINER DES BARRES

(30) Priorität: 30.08.1996 DE 19635258
(43) Veröffentlichungstag der Anmeldung: 16.06.1999
(73) Patentinhaber: STAMA MASCHINENFABRIK GMBH, D-73278 Schlierbach (DE)
(72) Erfinder: STARK, Gerhard, D-73274 Notzingen (DE); BLAZEK, Pavel, D-73095 Albershausen (DE)
(74) Vertreter: Witte, Alexander, Dr.-Ing.
(86) Internationale Anmeldenummer: EP9704613
(87) Internationale Veröffentlichungsnummer: WO9808648

(56) Entgegenhaltungen:
- WO-A-89/11951
- CH-A- 616 097
- DD-A- 137 546
- DE-A- 3 151 613
- US-A- 4 951 376

## Beschreibung

Die Erfindung betrifft ein Bohr- und Fräswerk nach dem Oberbegriff des Anspruchs 1 und wie aus WO 89/11951 bekannt ist.

Bei einem bekannten Bohr- und Fräswerk dieser Gattung (siehe auch EP 0 368 996 B1) hat die Spannachse, um die der Werkstückträger drehantreibbar ist, eine durch die Anordnung des Maschinenbettes festgelegte, zu dessen Längsrichtung parallele, waagerechte Lage; dementsprechend ist die Werkstoffstange, deren Achse mit der Spannachse übereinstimmt, immer waagerecht parallel zur Längsrichtung des Maschinenbettes angeordnet. Die vom Fahrständer getragene Werkzeugspindel ist senkrecht angeordnet und läßt sich zur Bearbeitung eines von einem vorderen Endabschnitt einer Werkstoffstange gebildeten Werkstücks nacheinander mit mehreren Werkzeugen, beispielsweise Bohrern oder Fräsern, bestücken. Am Fahrständer ist zusätzlich eine unabhängig von der Werkzeugspindel arbeitende Abtrenneinheit zum Abtrennen des auf diese Weise bearbeiteten Werkstücks angeordnet. In Längsrichtung des Maschinenbettes ist ein vom Fahrständer unabhängiger Schlitten verfahrbar, auf dem eine Greif- und Schwenkeinheit angeordnet ist. Diese weist ein Spannfutter auf, das während der Bearbeitung des noch mit der Werkstoffstange verbundenen Werkstücks als Gegenhalter einsetzbar ist und das Werkstück, sobald es von der Werkstoffstange abgetrennt worden ist, ganz übernimmt, so daß dessen Rückseite von einem oder mehreren nacheinander an der Werkzeugspindel angeordneten Werkzeugen bearbeitet werden kann. Das Spannfutter ist um eine zur Spannachse des Werkstückträgers und zur Spindelachse normale, also waagerechte Achse schwenkbar, so daß an dem im Spannfutter der Greif- und Schwenkeinheit gespannten Werkstück auch beispielsweise schräge Einschnitte oder Bohrungen angebracht werden können. Nach der Übergabe des Werkstücks von der Spanneinrichtung am Werkstückträger an das Spannfutter der Greif- und Schwenkeinheit läßt sich allerdings eine ebenso hohe Bearbeitungsgenauigkeit wie vor der Übergabe im allgemeinen nicht mehr erzielen, da sich bei jeder Werkstückübergabe Ungenauigkeiten einschleichen können.

Der Erfindung liegt deshalb die Aufgabe zugrunde, beim Verarbeiten von Werkstoffstangen auf einem Bohr- und Fräswerk eine besonders vielseitige Bearbeitung des jeweils vordersten, noch mit der Werkstoffstange zusammenhängenden Werkstücks zu ermöglichen und insoweit die Bearbeitungsgenauigkeit zu steigern.

Die Aufgabe ist erfindungsgemäß mit den Merkmalen des Anspruchs 1 gelöst.

Mit der Erfindung wird erreicht, daß das noch mit der Werkstoffstange zusammenhängende und ausschließlich durch diese in seiner Lage definierte Werkstück in jede beliebige durch Drehen um die Spannachse und Schwenken um die Schwenkachse erreichbare Lage gebracht werden kann, ohne daß die ursprüngliche Einspannung der Werkstoffstange in der Spanneinrichtung gelöst wird. Dies hat zur Folge, daß bei allen Arbeitsgängen, die von an der Werkzeugspindel befestigten Werkzeugen am Werkstück ausgeführt werden, grundsätzlich die gleiche hohe Genauigkeit erreichbar ist, unabhängig davon, welchen Winkel die Spindelachse mit der Spannachse einschließt. Wegen der Möglichkeit, diesen Winkel im Bereich von mindestens 90° zu verändern und das Werkstück zugleich bei Bedarf um die Spannachse zu drehen, kann beispielsweise aus einer Vierkantstange ein Werkstück nicht nur an seiner Vorderseite und an seinen vier Längsseiten bearbeitet werden sondern weitgehend auch schon an seiner Rückseite, solange noch eine ausreichend starke Verbindung des Werkstücks mit dem Rest der Werkstoffstange besteht. Zum Schluß kann diese Verbindung von einem an der Werkzeugspindel befestigten Werkzeug durchtrennt werden, beispielsweise von einer Kreissäge, wobei die Spannachse eine zur Spindelachse parallele Stellung einnehmen kann. Eine gesonderte Abtrenneinheit der beim eingangs genannten bekannten Bohr- und Fräswerk vorgesehenen Art ist also entbehrlich.

Bei einem erfindungsgemäßen Bohr- und Fräswerk ist aus den genannten Gründen eine gesonderte Greif- und Schwenkeinheit für eine rückseitige Bearbeitung der Werkstücke in den meisten Fällen ebenfalls entbehrlich; es ist jedoch möglich, eine solche Einheit in gleicher oder ähnlicher Weise vorzusehen, wie in der genannten EP 0 368 996 B1 dargestellt.

Die Schwenkachse des Werkstückträgers kann so angeordnet sein, daß sie dessen Spannachse in einem Abstand kreuzt. Im allgemeinen ist jedoch die Steuerung der verschiedenen Maschinenbewegungen einfacher programmierbar, wenn die Schwenkachse des Werkstückträgers dessen Spannachse schneidet, diese beiden Achsen also in einer gemeinsamen Ebene liegen.

Um das Einführen von Werkstoffstangen in den Werkstückträger zu erleichtern, ist das erfindungsgemäße Bohr- und Fräswerk zweckmäßigerweise dadurch weitergebildet, daß
- der Werkstückträger in eine Aufnahmestellung schwenkbar ist, in der die Spannachse, betrachtet in der Richtung, in der die Werkstoffstange durch die Spanneinrichtung hindurchgeschoben wird, abwärts geneigt ist, und
- dem Werkstückträger eine entsprechend geneigte, den Schwenkraum freilassende, Stangenführung vorgelagert ist.

Schließlich ist es vorteilhaft, wenn der Werkstückträger um die Spannachse mit einer für Drehbearbeitungen ausreichenden Drehgeschwindigkeit drehantreibbar ist.

Ein Ausführungsbeispiel der Erfindung wird im folgenden anhand schematischer Zeichnungen mit weiteren Einzelheiten beschrieben. In den Zeichnungen zeigen:
- Fig. 1: die Draufsicht eines erfindungsgemäßen Bohr- und Fräswerks,
- Fig. 2: die Seitenansicht in Richtung des Pfeils II in Fig.1,
- Fig. 3: die Vorderansicht in Richtung des Pfeils III in Fig.2,
- Fig. 4: einen vergrößerten Ausschnitt aus Fig.3,
- Fig. 5: die Draufsicht in Richtung des Pfeils V in Fig.4 und
- Fig. 6 bis 12: stärker schematisierte Vorderansichten des Bohr- und Fräswerks in sieben aufeinanderfolgenden Phasen einer Werkstückbearbeitung.

Das dargestellte Bohr- und Fräswerk hat ein Maschinenbett 10, auf dem ein Fahrständer 12 in einer waagerechten Ebene gesteuert verstellbar ist, nämlich in einer Längsrichtung X und in einer Querrichtung Y. Am Fahrständer 12 ist-ein Vertikalschlitten 14 angeordnet, der eine Spindeleinheit 16 mit einer senkrechten Werkzeugspindel 18 trägt und längs der Spindelachse Z gesteuert verstellbar ist. Das Bohr- und Fräswerk ist in erster Linie dazu vorgesehen, aus Werkstoffstangen W mit Vierkant- oder sonstigem Polygonprofil, aber auch aus runden Werkstoffstangen mit einem Durchmesser von beispielsweise bis zu 60mm, Werkstücke W1 herzustellen und diese weitgehend fertig zu bearbeiten.

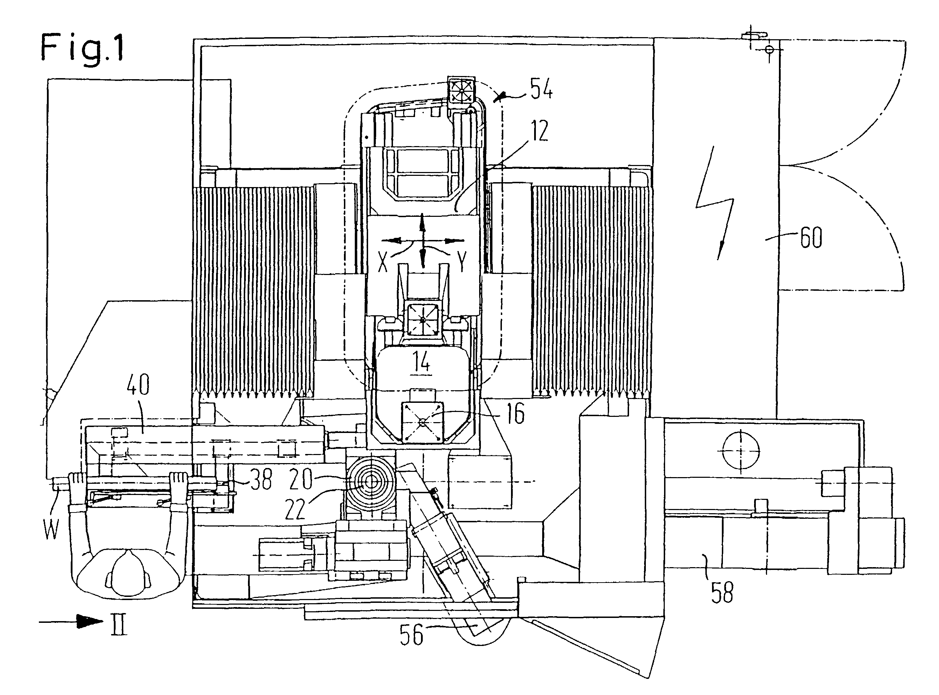

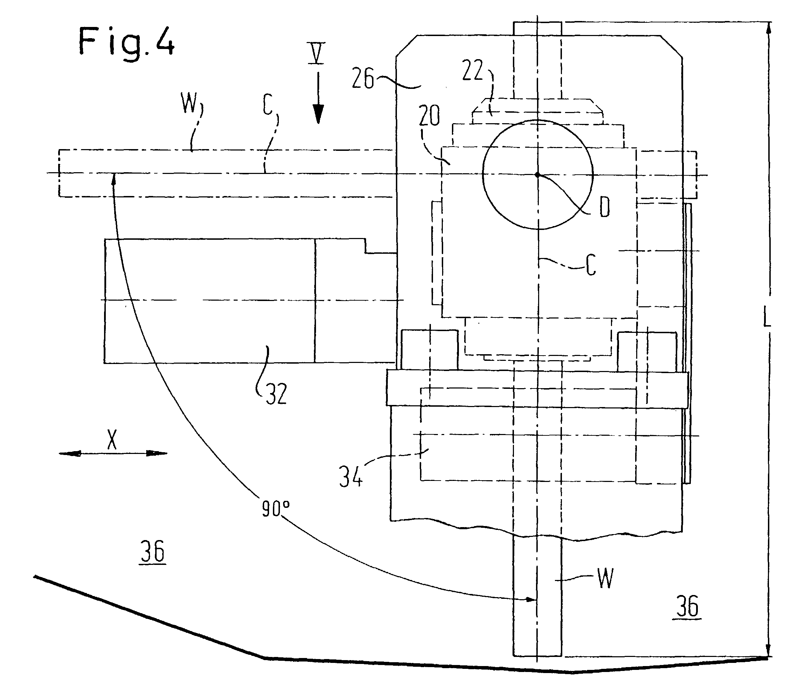

Zum Halten, Drehen und Schwenken jeweils einer Werkstoffstange W ist ein Werkstückträger 20 mit einer Spanneinrichtung 22 üblicher Art, beispielsweise in Form einer Spannpatrone oder eines Mehrbackenfutters, vorgesehen. Die Spanneinrichtung 22 definiert eine Spannachse C, mit der die Achse der Werkstoffstange W übereinstimmt, und längs der diese durch den Werkstückträger 20 und die Spanneinrichtung 22 schrittweise hindurchschiebbar ist, nämlich in Fig.1, 3, 4 und 6 bis 12 von links nach rechts. Der Werkstückträger 20 ist um die Spannachse C drehbar in einer Brücke 24 gelagert, die zwischen zwei am Maschinenbett 10 befestigten Lagerböcken 26 und 28 angeordnet und Bestandteil eines Schwenktisches 30 ist. Der Schwenktisch 30 ist mittels eines numerisch gesteuerten Schwenkantriebs 32 um eine Schwenkachse D schwenkbar, die sich parallel zur Querrichtung Y, im dargestellten Beispiel also waagerecht, erstreckt und die Spannachse C rechtwinklig schneidet. Der Werkstückträger 20 ist samt der Spanneinrichtung 22 mittels eines numerisch gesteuerten Drehantriebs 34 um die Spannachse C dreheinstellbar und ist außerdem mit wählbaren Drehzahlen von beispielsweise 4000 bis 6000 Umdrehungen pro Minute drehbar, so daß an der Werkstoffstange W neben üblichen Bohr- und Fräsarbeiten auch Dreharbeiten ausgeführt werden können.

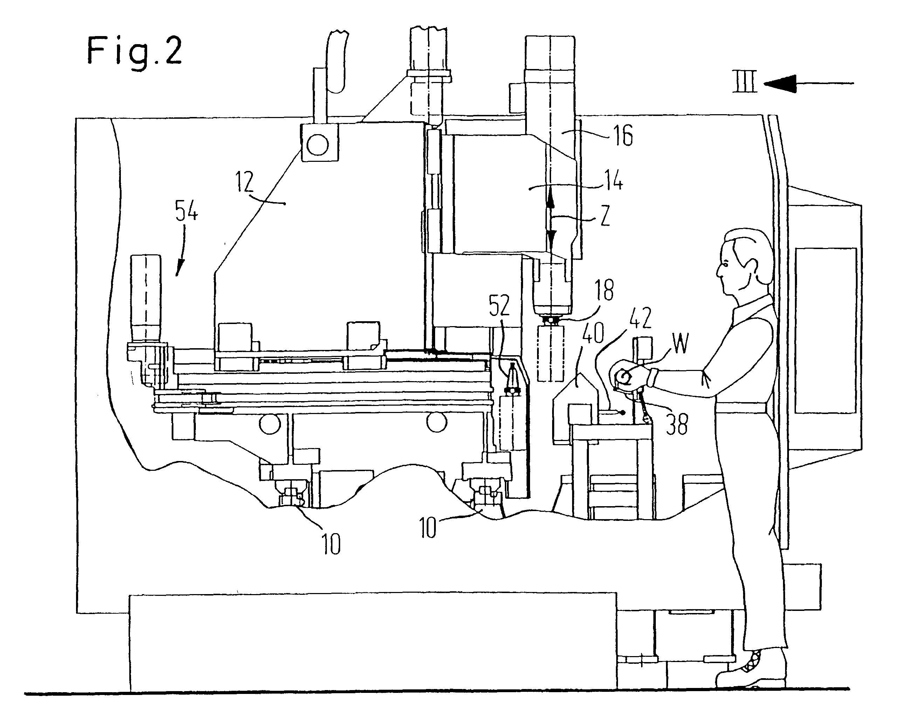

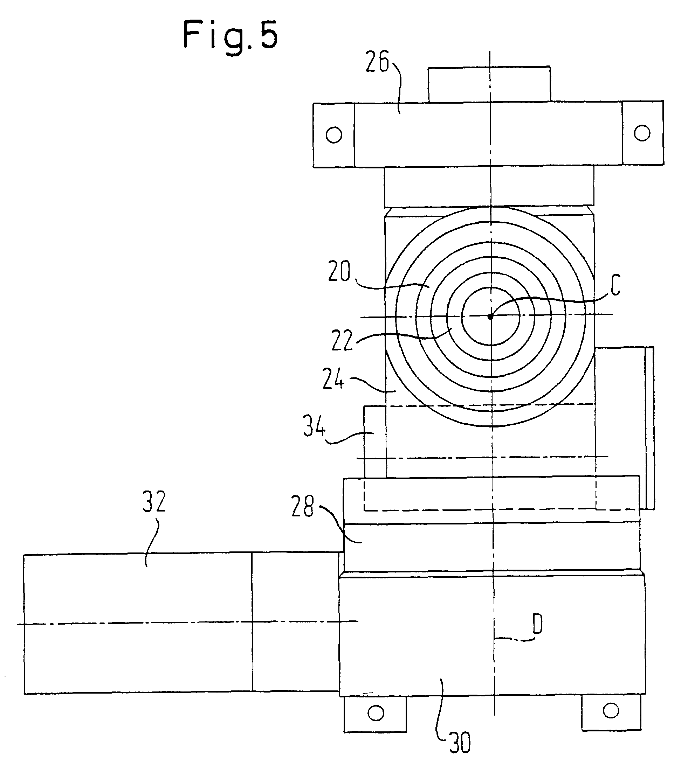

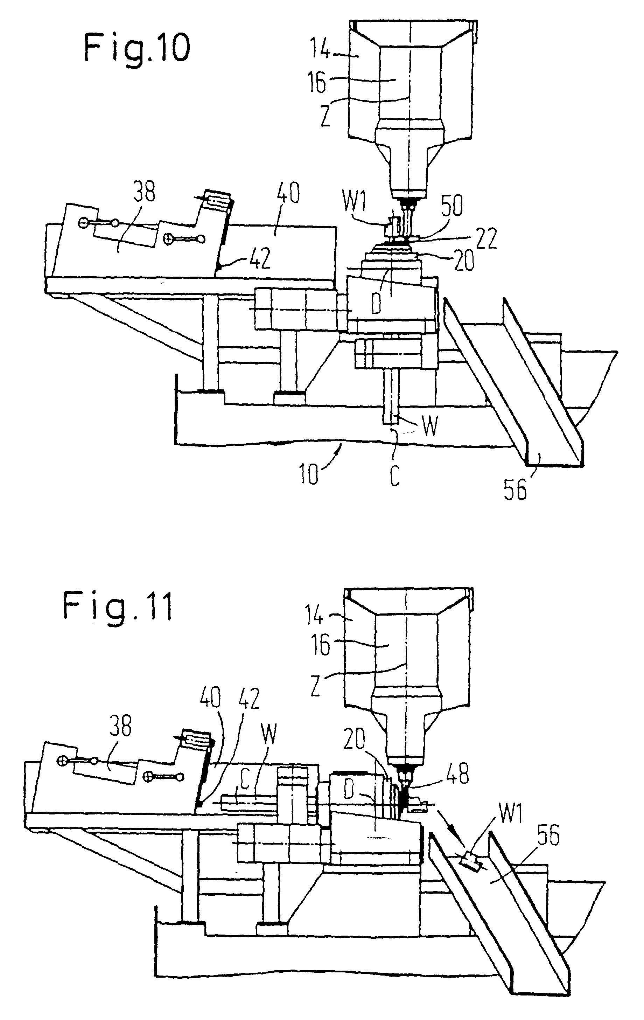

Die Lagerböcke 26 und 28 sind so hoch und auf einem solchen Unterbau befestigt, daß zwischen ihnen ein Schwenkraum 36 freibleibt, der es ermöglicht, eine Werkstoffstange W von zum Herstellen zahlreicher Werkstücke W1 ausreichender Stangenlänge L, z.B. 800 oder 1000mm, in die Senkrechte zu schwenken, wie in Fig.1 bis 5 und in Fig.10 dargestellt.

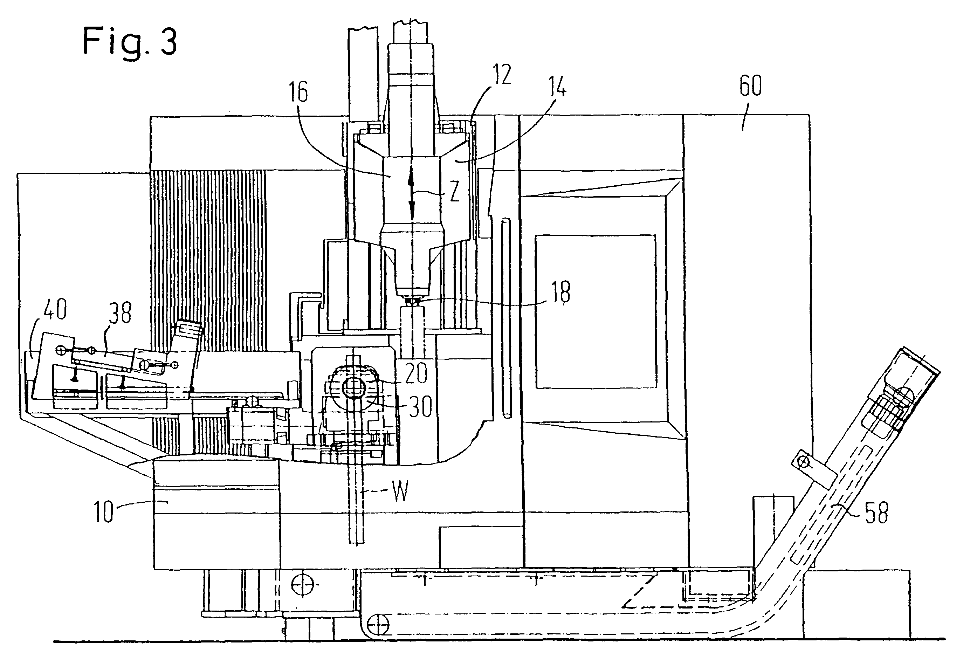

Um das Einführen jeweils einer Werkstoffstange W in die Spanneinrichtung 22 zu erleichtern, ist ihr im gemäß Fig.1, 3, 4 und 6 bis 12 linken Bereich des Bohr- und Fräswerks eine mit üblichen Prismenführungen ausgestattete Stangenführung 38 vorgeschaltet, die in einstellbarer Höhe nach rechts abwärts geneigt am Maschinenbett 10 abgestützt ist. Die Stangenführung 38 ist derart freiliegend angeordnet, daß bei Bedarf ein Kran verwendet werden kann, um eine Werkstoffstange W auf ihr abzulegen. Ferner ist auf dem Maschinenbett 10 eine Zuführeinrichtung 40 abgestützt, die im dargestellten Beispiel eine pneumatische Kolbenzylindereinheit mit einem Vorschubfinger 42 aufweist, der an das hintere, in Fig.1 und 3 linke Ende der Werkstoffstange W anlegbar ist, um diese vorwärts zu schieben.

Für die Werkzeugspindel 18 wird eine Vielzahl von Werkzeugen bereitgehalten, darunter ein Anschlag 44, Bohrer 46, Fräser 48, ein oder mehrere nicht dargestellte Drehwerkzeuge und eine Kreissäge 50, die an je einem auswechselbaren Werkzeughalter 52 eingespannt sind. Zum dargestellten Bohr- und Fräswerk gehört ein Werkzeugmagazin 54 in Form eines Kettenmagazins, in dem die Werkzeughalter 52 mit den jeweils nicht benötigten Werkzeugen abgelegt und für ihren nächsten Einsatz geordnet bereitgehalten werden.

Schließlich sind in den Zeichnungen eine Werkstückrutsche 56, ein Späneförderer 58 üblicher Bauart sowie ein Schaltschrank 60 dargestellt, der u.a. numerische Steuerungen für die beschriebenen Bewegungen enthält.

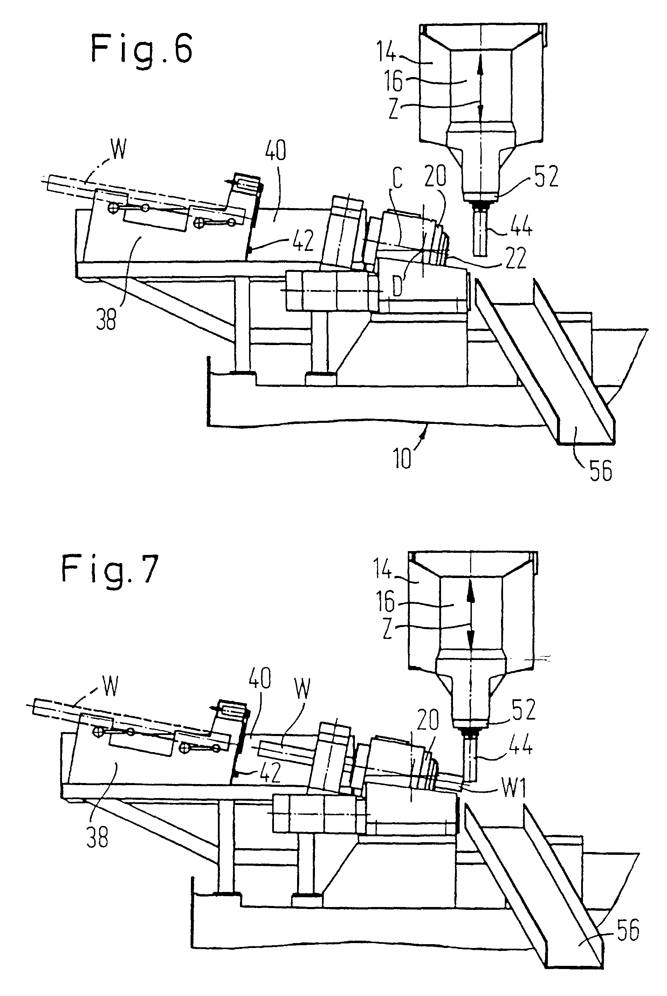

Fig.6 bis 12 zeigen, wie eine Werkstoffstange W zu Werkstücken W1 verarbeitet wird. Die Werkstoffstange W hat beispielsweise ein quadratisches Profil von 50mm Seitenlänge und eine Gesamtlänge von 800mm, die für beispielsweise zwanzig Werkstücke ausreicht. Gemäß Fig.6 wird der Werkstückträger 20 mittels des Schwenkantriebs 32 in eine gegen die Längsrichtung X nach rechts unten geneigte, zur Stangenführung 38 parallele Lage gebracht, und die Werkstoffstange W wird auf der Stangenführung 38 abgelegt, nachdem deren Höhenlage derart eingestellt worden ist, daß die Stangenachse mit der Spannachse C der Spanneinrichtung 22 fluchtet.

Sodann wird die Werkstoffstange W gemäß Fig.7 manuell auf der Stangenführung 38 nach rechts abwärts in die Spanneinrichtung 22 hinein und durch sie hindurchgeschoben, so daß der als erstes Werkstück W1 vorgesehene vordere Abschnitt der Werkstoffstange W nach rechts aus der Spanneinrichtung 22 hinausragt und gegen einen Anschlag 44 stößt. Der Anschlag 44 ist zu diesem Zweck mit seinem Werkzeughalter 52 an der Werkzeugspindel 18 befestigt und in Stellung gebracht worden. Das hintere Ende der Werkstoffstange W hat die Stangenführung 38 verlassen; diese hat von der Schwenkachse D einen Abstand in der Größenordnung der Länge L der Werkstoffstange W, so daß die folgenden Bewegungen der Werkstoffstange W von der Stangenführung 38 nicht behindert werden können.

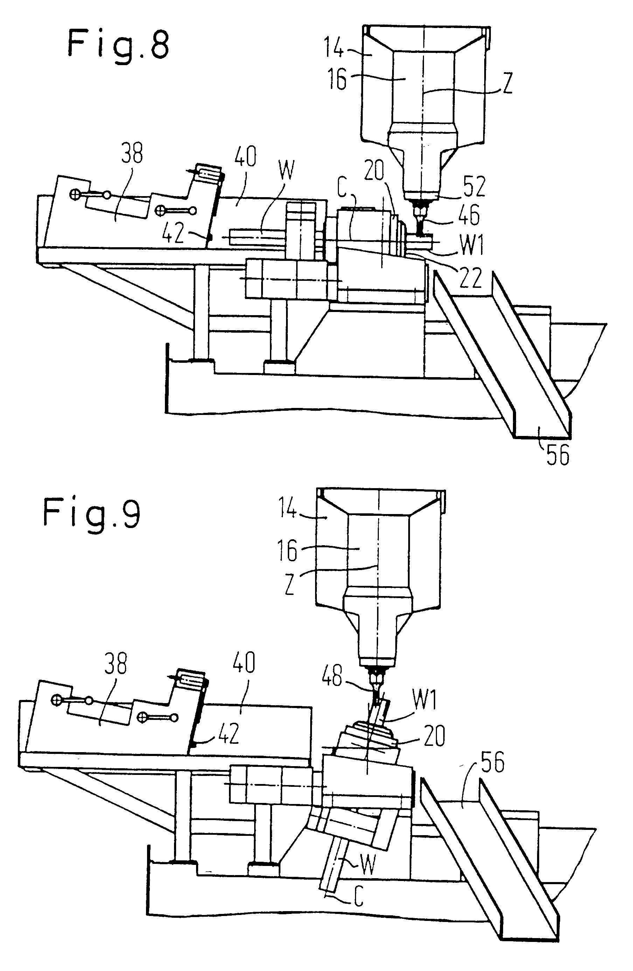

Gemäß Fig.8 wird nun der Werkstückträger 20 in eine Ausgangsstellung geschwenkt, bei der sich die Spannachse C parallel zur Längsachse X erstreckt. In dieser Ausgangsstellung wird die Werkstoffstange L beispielsweise mit hoher Geschwindigkeit gedreht, damit an ihr mit üblichen, selbst nicht rotierenden Drehmeißeln od.dgl. Dreharbeitsgänge ausgeführt werden können, und anschließend wird die Werkstoffstange W, immer noch in der waagerechten Lage gemäß Fig.8, numerisch gesteuert in verschiedene Drehwinkelstellungen gebracht, damit an ihr Bohr- und Fräsarbeiten ausgeführt werden können.

Daraufhin wird der Werkstückträger 20 gemäß Fig.9 in eine schräg nach oben weisende Stellung der Spannachse C geschwenkt, und in dieser Stellung werden weitere Bohrarbeiten und/oder bei stillstehendem oder um die Spannachse C drehendem Werkstückträger 20, weitere Fräsarbeiten ausgeführt.

Danach wird der Werkstückträger 20 gemäß Fig.10 in eine senkrechte Stellung der Spannachse C geschwenkt, und das im wesentlichen fertig bearbeitete erste Werkstück W1 wird von einer nun an der Werkzeugspindel 18 befestigten Kreissäge 50 weitgehend, jedoch noch nicht vollständig, vom Rest der Werkstoffstange W getrennt.

Schließlich wird der Werkstückträger 20 gemäß Fig.11 wieder in die waagerechte Lage der Spannachse C geschwenkt und das Werkstück W1 wird mittels eines Fräsers 48 vollständig vom Rest der Werkstoffstange W abgetrennt, so daß das Werkstück W1 in die Werkstückrutsche 56 fällt. Falls ein vollständig gratfreies Abtrennen und/oder eine Rückseitenbearbeitung des Werkstücks W1 erforderlich ist, kann eine Gegenspanneinrichtung bekannter Art vorgesehen sein, in der das Werkstück W1 für eine solche Rückseitenbearbeitung aufgenommen wird.

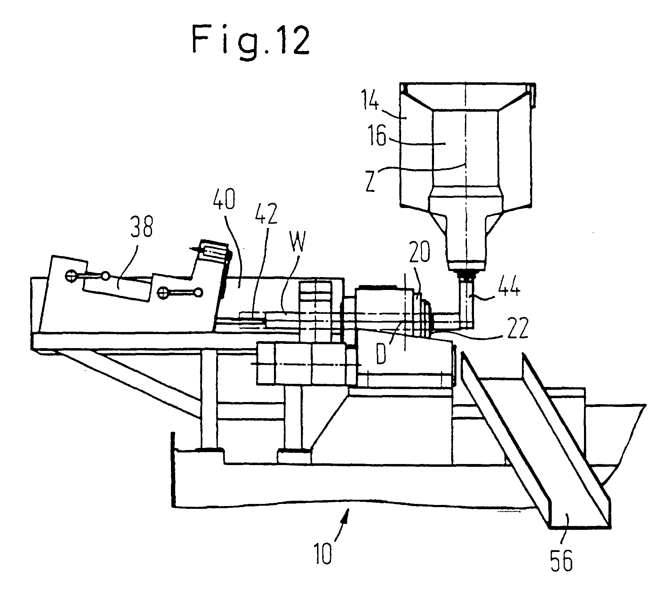

Gemäß Fig.12 beginnt der nächste Arbeitszyklus damit, daß in die Werkstückspindel 18 wieder der Anschlag 44 eingesetzt wird und die Werkstoffstange W von der Zuführeinrichtung 40 mit ihrem an der Rückseite der Werkstoffstange angreifenden Vorschubfinger 42 vorgeschoben wird, bis das vordere Ende der Werkstoffstange W gegen den Anschlag 44 stößt. Anschließend wird der Vorschubfinger 42 soweit zurückgefahren, daß er im weiteren Verlauf des Arbeitszyklus die Werkstoffstange W nicht mehr berühren kann. Vorzugsweise wird der Vorschubfinger 42 jeweils sofort nach dem Vorschieben der Werkstoffstange W automatisch in eine hintere Endstellung gebracht.

## Patentansprüche

1. Bohr- und Fräswerk zum Verarbeiten von Werkstoffstangen (W) zu einzelnen Werkstücken (W1), mit
- einem Maschinenbett (10), das eine Längsrichtung (X) und eine Querrichtung (Y) definiert,
- einem Fahrständer (12), der auf dem Maschinenbett (10) längs und quer gesteuert verstellbar ist,
- zumindest einer Werkzeugspindel (18), die am Fahrständer (12) entlang einer zur Längsrichtung (X) und zur Querrichtung (Y) normalen Spindelachse (Z) gesteuert verstellbar ist,
- einem Werkstückträger (20), der eine Spannachse (C) definiert, um diese Spannachse (C) gesteuert dreheinstellbar ist und eine Spanneinrichtung (22) enthält, durch die eine Werkstoffstange (W) hindurchschiebbar ist, und in der die Werkstoffstange (W) festspannbar ist, wobei ein vorderer Abschnitt der Werkstoffstange (W) als zu bearbeitendes Werkstück (W1) im Arbeitsbereich der Werkzeugspindel (18) angeordnet ist, und
- einer Zuführeinrichtung (40) zum Hindurchschieben der Werkstoffstange (W) durch die Spanneinrichtung (22),
**dadurch gekennzeichnet, daß**
- der Werkstückträger (20) um eine zur Spannachse (C) sowie zur Spindelachse (Z) normale Schwenkachse (D) gesteuert in einem Bereich schwenkbar ist, der sich mindestens von einer zur Spindelachse (Z) normalen Lage der Spannachse (C) bis zu einer zur Spindelachse (Z) parallelen Lage der Spannachse (C) erstreckt,
- das Maschinenbett (10) einen Schwenkraum (36) aufweist, in den der vom zu bearbeitenden Werkstück (W1) abgewandte Endbereich der Werkstoffstange (W) hineinschwenkbar ist, und
- die Zuführeinrichtung (40) in eine Stellung bewegbar ist, in der sie die Werkstoffstange (W) nicht am Schwenken hindert.

2. Bohr- und Fräswerk nach Anspruch 1,
**dadurch gekennzeichnet, daß** die Schwenkachse (D) des Werkstückträgers (20) dessen Spannachse (C) schneidet.

3. Bohr- und Fräswerk nach Anspruch 1 oder 2,
**dadurch gekennzeichnet, daß**
- der Werkstückträger (20) in eine Aufnahmestellung (Fig.6) schwenkbar ist, in der die Spannachse (C), betrachtet in der Richtung, in der die Werkstoffstange (W) durch die Spanneinrichtung hindurchgeschoben wird, abwärts geneigt ist, und
- dem Werkstückträger (20) eine entsprechend geneigte, den Schwenkraum (36) freilassende Stangenführung (38) vorgelagert ist.

4. Bohr- und Fräswerk nach einem der Ansprüche 1 bis 3,
**dadurch gekennzeichnet, daß** der Werkstückträger (20) um die Spannachse (C) mit einer für Drehbearbeitungen ausreichenden Drehgeschwindigkeit drehantreibbar ist.

## Claims

1. A drilling and milling mechanism for processing material rods (W) to individual workpieces (W1), comprising
- a machine bed (10) which defines a longitudinal direction (X) and a transverse direction (Y),
- a movable column (12) which is movable longitudinally and transversely on the machine bed (10) in controlled fashion,
- at least one tool spindle (18) which is movable in controlled fashion on the movable column (12) along a spindle axis (Z) extending vertically to both the longitudinal direction (X) and the transverse direction (Y),
- a workpiece support (20) defining a clamping axis (C) and being adjustable in controlled fashion by rotation about this clamping axis, said workpiece support comprising a clamping means (22) through which a material rod (W) can be pushed and in which the material rod (W) can be clamped in fixed fashion, a front portion of the material rod (W), constituting the workpiece (W1) to be machined, being arranged in the working area of the tool spindle (18), and
- a supply means (40) for pushing the material rod (W) through the clamping means (22),
**characterized in that**
- the workpiece support (20) is pivotable in controlled fashion about a pivot axis (D), extending vertically to both the clamping axis (C) and the spindle axis (Z), in a range extending at least from a position of the clamping axis (C) normal to the spindle axis (Z) to a position of the clamping axis (C) parallel to the spindle axis (Z),
- the machine bed (10) comprises a pivot space (36) into which the end portion of the material rod (W) remote from the workpiece (W1) to be machined can be pivoted, and
- the supply means (40) is movable into a position at which it does not obstruct the pivoting movement of the material rod (W).

2. The drilling and milling mechanism of claim 1, **characterized in that** the pivot axis (D) of the workpiece support (20) intersects the clamping axis (C) thereof.

3. The drilling and milling mechanism of claim 1 or claim 2, **characterized in that**
- the workpiece support (20) is pivotable into a receiving position (Fig. 6) at which the clamping axis (C) is inclined downwardly, as seen in the direction in which the material rod (W) is pushed through the clamping mechanism, and
- a rod guide means (38) which is inclined accordingly and leaves free the pivot space (36) is positioned upstream of the workpiece support (20).

4. The drilling and milling mechanism of any of claims 1-3 , **characterized in that** the workpiece support (20) can be driven for rotation about the clamping axis (C) at a rotational speed sufficient for lathe work.

## Revendications

1. Aléseuse-fraiseuse pour transformer des barres (W) en pièces (W1) individuelles, comportant
- un banc de machine (10) qui définit une direction longitudinale (X) et une direction transversale (Y),
- un montant mobile (12) qui est déplaçable longitudinalement et transversalement sur le banc de machine (10), de manière commandée,
- au moins une broche d'outil (18) qui est déplaçable de manière commandée sur le montant mobile (12), le long d'un axe de broche (Z) perpendiculaire à la direction longitudinale (X) et à la direction transversale (Y),
- un porte-pièce (20) qui définit un axe de serrage (C), est réglable en rotation autour de cet axe de serrage (C), de manière commandée, et contient un dispositif de serrage (22) à travers lequel une barre (W) peut être poussée et dans lequel la barre (W) peut être serrée, une portion avant de la barre (W) étant disposée, en tant que pièce (W1) à usiner, dans la zone de travail de la broche d'outil (18), et
- un dispositif d'amenée (40) pour pousser la barre (W) à travers le dispositif de serrage (22),
**caractérisée en ce que**
- le porte-pièce (20) peut pivoter, de manière commandée, autour d'un axe de pivotement (D) perpendiculaire à l'axe de serrage (C) ainsi qu'à l'axe de broche (Z), dans une zone qui s'étend au moins depuis une position de l'axe de serrage (C), perpendiculaire à l'axe de broche, jusqu'à une position de l'axe de serrage (C), parallèle à l'axe de broche (Z),
- le banc de machine (10) comporte un espace de pivotement (36) à l'intérieur duquel peut pivoter la zone terminale, tournée à l'opposé de la pièce (W1) à usiner, de la barre (W), et
- le dispositif d'amenée (40) est déplaçable dans une position dans laquelle il n'empêche pas le pivotement de la barre (W).

2. Aléseuse-fraiseuse selon la revendication 1,
**caractérisée**
**en ce que** l'axe de pivotement (D) du porte-pièce (20) coupe son axe de serrage (C).

3. Aléseuse-fraiseuse selon la revendication 1 ou 2,
**caractérisée en ce que**
- le porte-pièce (20) peut pivoter dans une position de réception (fig. 6) dans laquelle l'axe de serrage (C), vu dans la direction dans laquelle la barre (W) est poussée à travers le dispositif de serrage, est incliné vers le bas, et
- un guide-barre (38) convenablement incliné et dégageant l'espace de pivotement (36), est monté devant le porte-pièce (20).

4. Aléseuse-fraiseuse selon l'une des revendications 1 à 3,
**caractérisée**
**en ce que** le porte-pièce (20) peut être entraîné en rotation autour de l'axe de serrage (C) avec une vitesse de rotation suffisante pour des opérations de tournage.
